(19) **Europäisches Patentamt / European Patent Office / Office européen des brevets**

(11) **EP 4 693 459 A1**

(12) **EUROPEAN PATENT APPLICATION**
published in accordance with Art. 153(4) EPC

(43) Date of publication:
**11.02.2026 Bulletin 2026/07**

(21) Application number: **23930920.6**

(22) Date of filing: **15.12.2023**

(51) International Patent Classification (IPC):
$H01M\ 4/36^{(2006.01)}$  $H01M\ 4/13^{(2010.01)}$
$H01M\ 4/48^{(2010.01)}$  $H01M\ 4/62^{(2006.01)}$
$H01M\ 4/587^{(2010.01)}$

(52) Cooperative Patent Classification (CPC):
**H01M 4/13; H01M 4/36; H01M 4/48; H01M 4/587; H01M 4/62; Y02E 60/10**

(86) International application number:
**PCT/JP2023/044964**

(87) International publication number:
**WO 2024/202300 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.03.2023 JP 2023052986**

(71) Applicant: **AESC Japan Ltd.**
**Yokohama-Shi, Kanagawa 220-0012 (JP)**

(72) Inventors:
• **AKAGAWA, Kazuhiro**
  **Zama-shi, Kanagawa 252-0012 (JP)**
• **LU, Chiaying**
  **Zama-shi, Kanagawa 252-0012 (JP)**
• **SHIMOJI, Risa**
  **Zama-shi, Kanagawa 252-0012 (JP)**

(74) Representative: **Becker, Eberhard**
**Becker Kurig & Partner**
**Patentanwälte mbB**
**Bavariastraße 7**
**80336 München (DE)**

(54) **NEGATIVE ELECTRODE FOR NONAQUEOUS ELECTROLYTE SECONDARY BATTERY, AND NONAQUEOUS ELECTROLYTE SECONDARY BATTERY USING SAME**

(57) An objective of the present invention is to suppress the expansion and contraction when charging and discharging a nonaqueous electrolyte secondary battery, including lithium ion secondary batteries, when an Si-based negative electrode active material is used, to improve the lifespan (cycle characteristics) of the nonaqueous electrolyte secondary battery, and to improve rapid charging properties. The negative electrode active material contains: a silicon-based active material (A) containing $SiO_x$ (in the formula, x is a number satisfying $0.5 \leq x \leq 1.6$); a carbon-based active material (B) composed of secondary particles formed by aggregating primary particles; and a carbon-based active material (C) composed of primary particles different from the carbon-based active material (B). If the specific surface area of the silicon-based active material (A), the carbon-based active material (B), and the carbon-based active material (C) are $S_A[m^2/g]$, $S_B[m^2/g]$, and $S_C[m^2/g]$, respectively, the value of the maximum specific surface area among said specific surface areas is $S_{max}$, and the value of the minimum specific surface area among said specific surface areas is $S_{min}$, the value of $S_{max}/S_{min}$ is 3 or less, and $S_{max}$ is 3 or less.

EP 4 693 459 A1

## Description

Technical Field

The present invention relates to a negative electrode for nonaqueous electrolyte secondary battery, and a nonaqueous electrolyte secondary battery using the negative electrode for nonaqueous electrolyte secondary battery.

Description of Related Art

Nonaqueous electrolyte secondary batteries have been put to practical use as automotive batteries including hybrid vehicles and electric vehicles, and are also used as batteries for small electronic devices including mobile terminals. As such batteries, lithium ion secondary batteries in particular are widely used. Lithium ion secondary batteries are required to have various characteristics such as output characteristics, energy density, capacity, lifespan, high-temperature stability, and the like. In order to miniaturize batteries in particular, improving the volumetric energy density of batteries and increasing capacity have become urgent issues. Electric vehicle lithium ion secondary batteries in particular are required to improve energy density in order to further extend driving range. For this reason, various improvements have been made to battery configurations including electrodes and electrolytes.

It is known to use graphite as a negative electrode active material for lithium ion secondary batteries. Graphite is inexpensive, has little deterioration due to charge and discharge cycles of batteries, and has high safety, so it is widely used. However, in conventional lithium ion secondary batteries using graphite materials as negative electrode active materials, further improvement in energy density is difficult to expect, so exploration of negative electrode active materials with even higher capacity has been conducted. As high-capacity negative electrode active materials, silicon-based negative electrode active materials containing silicon and silicon oxides (hereinafter sometimes referred to as "Si-based negative electrode active materials", "Si-based negative electrode active materials", and the like) are attracting attention.

For example, Patent Document 1 discloses the specific surface area of a negative electrode material containing carbonaceous particles and silicon oxide particles. Further, Patent Document 2 discloses a lithium ion secondary battery using three types of negative electrode active materials including $SiO_x$ as a negative electrode active material, graphite having an average particle diameter exceeding 15 $\mu$m and not more than 25 $\mu$m, and graphite having an average particle diameter of 8 $\mu$m or more and 15 $\mu$m or less and having graphite particle surfaces coated with amorphous carbon.

Related Art Documents(s)

Patent Document

  Patent Document 1: International Publication No. 2018/097212.
  Patent Document 2: Japanese Patent Application Laid-Open Publication No. 2016-219275.

## SUMMARY

Technical Problem

Patent Documents 1 and 2 describe respective values of specific surface area of carbonaceous particles. However, the combinations of specific surface areas described in the examples of these documents were not sufficient to suppress the loss of contact between active material particles due to the expansion and contraction of the negative electrode that is repeated during charge and discharge of the lithium ion secondary battery.

The present invention aims to suppress the expansion and contraction during charge and discharge of a nonaqueous electrolyte secondary battery including a lithium ion secondary battery in the case of using a Si-based negative electrode active material, improve the lifespan (cycle characteristics) of the nonaqueous electrolyte secondary battery, and improve rapid charging property.

Means for solving the problems

One embodiment of the present invention is a negative electrode for nonaqueous electrolyte secondary battery that includes a negative electrode active material layer containing a negative electrode active material, a binder, and a conductive additive. The negative electrode includes a negative electrode active material layer containing a negative electrode active material, a binder, and a conductive additive,

the negative electrode active material includes a silicon-based active material (A) containing $SiO_x$ (where x is a number satisfying $0.5 \leqq x \leqq 1.6$),

a carbon-based active material (B) consisting of secondary particles formed by aggregation of primary particles; and
a carbon-based active material (C) consisting of primary particles different from the carbon-based active material (B), and

specific surface areas of the silicon-based active material (A), the carbon-based active material (B), and the carbon-based active material (C) are $S_A[m^2/g]$, $S_B[m^2/g]$, and $S_C[m^2/g]$, respectively, a maximum specific surface area value among these specific surface areas is $S_{max}$, and a minimum specific surface area value among these specific surface areas is $S_{min}$, where a value of $S_{max}/S_{min}$ is 3 or less, and $S_{max}$ is 3 or less.

Effects of the Invention

The negative electrode for nonaqueous electrolyte secondary battery of the present invention may provide a negative electrode for nonaqueous electrolyte secondary battery that suppresses expansion and contraction and is excellent in rapid charge and discharge even according to the use of Si-based negative electrode active material, and a nonaqueous electrolyte secondary battery using the negative electrode.

## DESCRIPTION OF THE EMBODIMENTS

Embodiments of the present invention are described below. One embodiment is a negative electrode for nonaqueous electrolyte secondary battery that includes a negative electrode active material layer containing a negative electrode active material, a binder, and a conductive additive. The negative electrode includes a negative electrode active material layer containing a negative electrode active material, a binder, and a conductive additive,
the negative electrode active material includes a silicon-based active material (A) containing $SiO_x$ (where x is a number satisfying $0.5 \leqq x \leqq 1.6$),

a carbon-based active material (B) that forms secondary particles formed by aggregation of primary particles, and
a carbon-based active material (C) consisting of primary particles different from the carbon-based active material (B).

The specific surface areas of the silicon-based active material (A), the carbon-based active material (B), and the carbon-based active material (C) are $S_A[m^2/g]$, $S_B[m^2/g]$, and $S_C[m^2/g]$, respectively, a maximum specific surface area value among these specific surface areas is $S_{max}$, and a minimum specific surface area value among these specific surface areas is $S_{min}$, where a value of $S_{max}/S_{min}$ is 3 or less, and $S_{max}$ is 3 or less.
In the embodiment, the nonaqueous electrolyte secondary battery is a battery that mainly uses an organic solvent-based electrolyte and is capable of repeatedly performing charge and discharge. An example of the nonaqueous electrolyte secondary battery is a lithium ion secondary battery. The nonaqueous electrolyte secondary battery includes a negative electrode for nonaqueous electrolyte secondary batteries as its constituent member. In the embodiment, the negative electrode is a thin plate-shaped or sheet-shaped battery member in which a negative electrode active material layer is formed by applying or rolling and drying a mixture containing a negative electrode active material on a negative electrode current collector that is a metal foil such as copper foil. That is, the negative electrode is composed of a negative electrode current collector and negative electrode active material layers containing negative electrode active material applied on two surfaces thereof. In the embodiment, the negative electrode active material layer preferably includes a negative electrode active material, a binder, and a conductive additive. The negative electrode active material is a substance used in the negative electrode among substances involved in reactions that generate electrical energy. Further, the binder is generally a substance for binding negative electrode active material particles to bring generally particle-shaped negative electrode active materials into electrical contact with each other. The conductive additive is a material for reducing the resistance of the electrode.
In the embodiment, the negative electrode active material includes a silicon-based active material (A) containing $SiO_x$ (where x is a number satisfying $0.5 \leqq x \leqq 1.6$) and a carbon-based active material. The silicon-based active material (A) is a silicon oxide having the chemical formula $SiO_x$, where x is a number satisfying $0.5 \leqq x \leqq 1.6$. The silicon-based active material (A) may be a single compound or a mixture of a plurality of compounds. The silicon-based active material (A) is preferably in the form of particles having generally uniform or non-uniform sizes. The negative electrode active material may further include a lithium silicon compound. The lithium silicon compound is a compound containing lithium element and silicon element, such as $Li_{4.4}Si$, $Li_{3.75}Si$, or $Li_4SiO_4$ (lithium silicate). The lithium silicon compound is a stable compound and does not release lithium during charge and discharge of the nonaqueous electrolyte secondary battery.

Thus, by using in combination with a silicon-based active material that tends to cause volume change during charge and discharge of the nonaqueous electrolyte secondary battery, the volume change of the negative electrode active material layer may be suppressed. Furthermore, the silicon-based active material (A) may be doped with lithium in advance. In the case of the presence of a lithium silicon compound or lithium-doped silicon, the specific surface area of the silicon-based active material (A) refers to the overall specific surface area of these silicon-containing compounds and the like, unless otherwise specified. In this specification, the specific surface area of the silicon-based active material (A) is denoted as. A silicon-based active material having a specific surface area $S_A$ of 0.7 m$^2$/g or more may be used as the silicon-based active material (A) of the embodiment. It is noted that in this specification, the specific surface area refers to the BET specific surface area. The BET specific surface area may be obtained by adsorbing gas molecules (such as nitrogen) with known adsorption occupied area onto a substance and measuring the amount thereof. The BET specific surface area of the negative electrode active material may be measured according to Japanese Industrial Standard JIS Z 8830 "Method for measuring specific surface area of powder (solid) by gas adsorption".

The negative electrode active material further includes a carbon-based active material. The carbon-based active material is preferably natural graphite, artificial graphite, hard carbon, soft carbon, or any mixture thereof. Here, graphite is a carbon material of hexagonal system hexagonal plate-like crystal, and may be called graphite, graphite, and the like. Natural graphite and artificial graphite include natural graphite having a coating of amorphous carbon and artificial graphite having a coating of amorphous carbon. Here, amorphous carbon is a carbon material that may have a structure partially similar to graphite, has a structure in which microcrystals are randomly networked, and is amorphous as a whole. Examples of amorphous carbon include carbon black, coke, activated carbon, carbon fiber, hard carbon, soft carbon, mesoporous carbon, and the like. In the case of using artificial graphite, it is preferable that the interlayer distance d value ($d_{002}$) is 0.33 nm or more. The crystal structure of artificial graphite is generally thinner than that of natural graphite. In the case of using artificial graphite as a negative electrode for nonaqueous electrolyte secondary batteries, particularly lithium ion secondary batteries, it is necessary to have an interlayer distance into which lithium ions may be inserted. The interlayer distance at which lithium ions may be inserted and removed may be estimated by the d value ($d_{002}$), and if the d value is 0.33 nm or more, lithium ions may be inserted and removed without any problems. In the embodiment, it is preferable to include at least two types of carbon-based active materials. The two types of carbon-based active materials are referred to as carbon-based active material (B) and carbon-based active material (C), respectively. The carbon-based active material (B) is preferably a carbon-based active material composed of secondary particles formed by aggregation of primary particles. The carbon-based active material (B) is preferably artificial graphite whose surface is coated with amorphous carbon. Further, the carbon-based active material (C) is a primary particles different from the primary particles of the carbon-based active material (B), and is a carbon-based active material in which primary particles do not aggregate and do not form secondary particles. The carbon-based active material (C) is preferably artificial graphite whose surface is not coated. In this specification, the specific surface area of the carbon-based active material (B) is denoted as $S_B$, and the specific surface area of the carbon-based active material (C) is denoted as Sc (unit: m$^2$/g). A carbon-based active material having a specific surface area of 0.5 to 2.5 m$^2$/g may be used as the carbon-based active material (B) of this embodiment, and a carbon-based active material having a specific surface area of 00.5 to 2.5 m$^2$/g may be used as the carbon-based active material (C) of this embodiment.

In this embodiment, among the respective specific surface areas $S_A$[m$^2$/g], $S_B$[m$^2$/g], and $S_C$[m$^2$/g] of the silicon-based active material (A), carbon-based active material (B), and carbon-based active material (C), the maximum specific surface area value is defined as $S_{max}$, and the minimum specific surface area value among these specific surface areas is defined as $S_{min}$, it is preferable that the value of $S_{max}$/$S_{min}$ is 3 or less and $S_{max}$ is 3 or less. By combining negative electrode active materials having such specific surface area relationships, the packing density of the negative electrode active material particles is optimized, and it becomes possible to suppress expansion and contraction accompanying charge and discharge. In the embodiment, by adjusting the specific surface area of particles constituting the negative electrode active material as described above, the cause of suppressing peeling between the negative electrode current collector and the negative electrode active material layer or improving the cycle characteristics of the battery is not clear. However, the specific surface area of particles constituting the negative electrode active material affects the aggregation state of the negative electrode active material particles in the negative electrode slurry and the adhesion of the binder between negative electrode active material particles in the case of forming the negative electrode active material layer, and it is considered that differences occur in the peeling property between the negative electrode current collector and the negative electrode active material layer.

Further, regarding the blending of the negative electrode active material, it is particularly preferable that the content of the silicon-based active material is greater than 5 mass% and less than 50 mass% with respect to the total amount of negative electrode active material in the negative electrode active material layer. More preferably, the content of the silicon-based active material is greater than 10 mass% and less than 20 mass%. In the case of the content of the silicon-based active material being too high, the volume change of the negative electrode active material during charge and discharge of the nonaqueous electrolyte secondary battery becomes large, which is not preferable. Further, in the case of the content of the silicon-based active material being too low, it becomes difficult to obtain the effect of high energy density.

The negative electrode active material described above may improve electrical contact by binding particles together with a binder. The binder preferably contains poly(meth)acrylic acid, a metal salt of poly(meth)acrylic acid, an alkyl ester of poly(meth)acrylic acid, or any mixture thereof. Compounds suitable as binders are, for example, polyacrylic acid, polymethacrylic acid; sodium polyacrylate, potassium polyacrylate, sodium polymethacrylate, potassium polymethacrylate; ethyl polyacrylate, ethyl polyacrylate, butyl polyacrylate, methyl polymethacrylate, ethyl polymethacrylate, butyl polymethacrylate, and any mixture thereof may be used. The content of the binder is preferably 2 mass% or more and less than 10 mass% with respect to the total solid content of the negative electrode active material layer. In the case of the content of the binder being too high, the part where the active material surface is covered by the binder increases, which may cause a decrease in ionic conductivity and electronic conductivity. Further, in the case of the content of the binder being too low, electrical contact between negative electrode active material particles may not be performed appropriately.

As a component of the binder, in addition to the above compounds, it is particularly preferable to further contain carboxymethyl cellulose (referred to as "CMC"), which is a derivative of cellulose, or a metal salt of carboxymethyl cellulose (for example, sodium carboxymethyl cellulose, potassium carboxymethyl cellulose). Carboxymethyl cellulose or a metal salt of carboxymethyl cellulose plays a role in stabilizing the above binder compounds and also stabilizes the electrical contact of the negative electrode active material. In the case of further adding CMC or a metal salt of CMC as a component of the binder, the content of CMC or CMC metal salt is preferably 0.05 mass% or more and 1.5 mass% or less, more preferably 0.08 mass% or more and 0.8 mass% or less, and further preferably 0.15 mass% or more and 0.30 mass% or less, with respect to the total solid content of the negative electrode active material layer.

In the embodiment, it is preferable that the content of the silicon-based active material (A) is 5 mass% or more and 50 mass% or less with respect to the total solid content of the negative electrode active material layer, and the content of the binder is 2 mass% or more and 8 mass% or less with respect to the total solid content of the negative electrode active material layer.

It is further preferable that the content of the silicon-based active material )A) is 10 mass% or more and 20 mass% or less with respect to the total solid content of the negative electrode active material layer, and the content of the binder is 2 mass% or more and 6 mass% or less with respect to the total solid content of the negative electrode active material layer.

Moreover, it is even more preferable that the content of the silicon-based active material (A) is 15 mass% or more and 20 mass% or less with respect to the total solid content of the negative electrode active material layer, and the content of the binder is 2.5 mass% or more and 3.8 mass% or less with respect to the total solid content of the negative electrode active material layer.

By appropriately adjusting the content of the silicon-based active material and the binder, the energy density of the nonaqueous electrolyte secondary battery may be improved.

The negative electrode active material layer preferably further includes a conductive additive. Examples of the conductive additive include carbon materials such as carbon fibers like carbon nanofibers, carbon black such as acetylene black and Ketjen black, activated carbon, graphite, mesoporous carbon, fullerenes, and carbon nanotubes. In the embodiment, it is particularly preferable to use carbon nanotubes (referred to as "CNT") as the conductive additive. CNT is a substance in which a six-membered ring network of carbon atoms (graphene) has a single-layer or multi-layer coaxial tube structure, and there are single-wall carbon nanotubes (single-layer, referred to as "SWCNT") and multi-wall carbon nanotubes (multi-layer, referred to as "MWCNT"). Either CNT may be used, but it is preferable to use bundled SWCNT having a shape in which SWCNTs gather and are made longer and larger in diameter than a single SWCNT so that the conductive network in the negative electrode does not break in the case of expansion and contraction occurring in the negative electrode active material layer. SWCNT is preferably mixed with at least one of the silicon-based active material (A), carbon-based active material (B), and carbon-based active material (C) in a state of being dispersed in a solvent in advance, the SWCNT is attached to the surface of the at least one active material, and the SWCNT that has been made longer and larger in diameter is disposed between at least two of the silicon-based active material (A), carbon-based active material (B), and carbon-based active material (C). Furthermore, to support conductivity in the negative electrode active material layer, carbon black may be used in combination separately from SWCNT.

In the case of using CNT as the conductive additive, the content of CNT is preferably 0.01 mass% or more and 1 mass% or less, more preferably 0.03 mass% or more and 0.8 mass% or less, and further preferably 0.1 mass% or more and 0.5 mass% or less, with respect to the total solid content of the negative electrode active material layer.

In addition, electrode additives generally used for electrode formation, such as thickeners, dispersants, and stabilizers, may be appropriately used in the negative electrode active material layer.

Another embodiment of the present invention is a nonaqueous electrolyte secondary battery that includes at least a negative electrode for nonaqueous electrolyte secondary battery of one embodiment, a positive electrode for nonaqueous electrolyte secondary battery, a separator, and a nonaqueous electrolyte.

The nonaqueous electrolyte secondary battery of the embodiment includes at least a negative electrode for nonaqueous electrolyte secondary battery, a positive electrode for nonaqueous electrolyte secondary battery, a separator, and a nonaqueous electrolyte as constituent members thereof.

In the embodiment, the positive electrode is a thin plate-shaped or sheet-shaped battery member in which a positive electrode active material layer is formed by applying or rolling and drying a mixture containing a positive electrode active material on a positive electrode current collector that is a metal foil such as aluminum foil. That is, the positive electrode is composed of a positive electrode current collector and a positive electrode active material layer containing a positive electrode active material applied on two surfaces or one surface thereof. In the embodiment, the positive electrode active material layer preferably includes a positive electrode active material and a binder. The positive electrode active material is a material used in the positive electrode among substances involved in reactions that generate electrical energy. Further, the binder is generally a substance for binding positive electrode active material particles in order to bring particle-shaped positive electrode active materials into electrical contact with each other.

The positive electrode active material used in the embodiment preferably includes a lithium-nickel composite oxide as the positive electrode active material. The lithium-nickel composite oxide is a transition metal composite oxide containing lithium and nickel represented by the general formula $Li_xNi_yMe_{(1-y)}O_2$ (where Me is at least one metal selected from the group consisting of Al, Mn, Na, Fe, Co, Cr, Cu, Zn, Ca, K, Mg, and Pb). It is particularly preferable to include a lithium-manganese composite oxide. Examples of the lithium-manganese composite oxide include lithium manganate ($LiMnO_2$) having a zigzag layered structure, spinel-type lithium manganate ($LiMn_2O_4$), and the like. Further, the positive electrode active material particularly includes a lithium nickel manganese cobalt composite oxide having a layered crystal structure represented by the general formula $Li_xNi_yCo_zMn_{(1-y-z)}O_2$. Here, x in the general formula is $1 \leqq x \leqq 1.2$, y and z are positive numbers satisfying y+z<1, and the value of y is 0.5 or more. It is noted that, since a single-phase composite oxide becomes difficult to synthesize according to an increase in the proportion of manganese, it is desirable that $1-y-z \leqq 0.4$. To obtain a high-capacity battery, it is particularly preferable that y>1-y-z and y>z. The lithium-nickel composite oxide having this general formula is a lithium-nickel-cobalt-manganese composite oxide (hereinafter sometimes referred to as "NCM"). NCM is a lithium-nickel composite oxide suitably used for achieving high capacity of batteries.

Examples of binders that form a positive electrode active material layer together with the positive electrode active material include fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrene butadiene rubber ($S_BR$), butadiene rubber (BR), chloroprene rubber (CR), isoprene rubber (IR), and acrylonitrile butadiene rubber (NBR), or polysaccharides such as carboxymethyl cellulose (CMC), xanthan gum, guar gum, and pectin.

Further, the positive electrode active material layer may also contain a conductive additive in some cases. Examples of conductive additives that may be used in some cases include carbon materials such as carbon fibers like carbon nanofibers, carbon black such as acetylene black and Ketjen black, activated carbon, graphite, mesoporous carbon, fullerenes, and carbon nanotube. In the embodiment, it is particularly preferable to use carbon nanotube (CNT) as the conductive additive. CNT is a substance in which a six-membered ring network of carbon atoms (graphene) has a single-layer or multi-layer coaxial tube structure, and there are single-wall carbon nanotube (single-layer, SWCNT) and multi-wall carbon nanotube (multi-layer, MWCNT). Either CNT may be used, but it is preferable to use bundled SWCNT having a shape in which SWCNTs gather and are made longer and larger in diameter than a single SWCNT so that the conductive network in the positive electrode does not break in the case of expansion and contraction occurring in the positive electrode active material layer. Furthermore, to support conductivity in the positive electrode active material layer, carbon black may be used in combination separately from SWCNT. In addition, electrode additives generally used for electrode formation, such as thickeners, dispersants, and stabilizers, may be appropriately used in the positive electrode active material layer.

The nonaqueous electrolyte secondary battery of the embodiment includes a separator as a constituent member. For the separator, for example, a polyolefin film may be used. Polyolefin refers to a compound obtained by polymerizing or copolymerizing α-olefins such as ethylene, propylene, butene, pentene, and hexene, and examples include polyethylene, polypropylene, polybutene, polypentene, polyhexene, and copolymers thereof. In the case of using a polyolefin film as the separator, it is convenient to have a structure having pores that are closed in response to battery temperature rise, that is, a porous or microporous polyolefin film. By having the polyolefin film have such a structure, even if the battery temperature rises, the separator may be closed (shut down) to cut off the ion flow. That is, a uniaxially stretched polyolefin film contracts and closes pores in response to heating of the battery, making it possible to prevent short circuits between the positive and negative electrodes. In order to exhibit the shutdown effect, it is very preferable to use a porous polyethylene membrane.

Further, a crosslinked film may be used as the separator. Since porous or microporous polyolefin films have the property of contracting in response to heating, the film contracts and shuts down in response to overheating of the battery. However, if the thermal shrinkage rate of the film is too large, the area of the film changes significantly, which may conversely cause large current flow. A crosslinked polyolefin film has an appropriate thermal shrinkage rate, so even in response to overheating, it may contract just enough to close the pores without significantly changing the area.

The separator used in the embodiment may have a heat-resistant fine particle layer on one side or two sides of the separator. In this case, the heat-resistant fine particle layer provided to prevent overheating of the battery has heat resistance with a heat-resistant temperature of 150°C or higher and is composed of inorganic fine particles that are stable to electrochemical reactions. Examples of such inorganic fine particles include inorganic oxides such as silica, alumina (α-alumina, β-alumina, 0-alumina), iron oxide, titanium oxide, barium titanate, and zirconium oxide; and minerals such as boehmite, zeolite, apatite, kaolin, spinel, mica, and mullite.

The nonaqueous electrolyte secondary battery of the embodiment includes a nonaqueous electrolyte. The nonaqueous electrolyte is an electrically conductive substance in which an ionic substance is dissolved in an organic solvent. The above-mentioned negative electrode for nonaqueous electrolyte secondary battery and positive electrode for nonaqueous electrolyte secondary battery are superimposed, a separator is disposed therebetween, and a nonaqueous electrolyte secondary battery element including this and the nonaqueous electrolyte is one unit of the main constituent members of the nonaqueous electrolyte secondary battery. Usually, a laminate formed by superimposing multiple negative electrodes for nonaqueous electrolyte secondary battery and multiple positive electrodes for nonaqueous electrolyte secondary battery via multiple separators is immersed in the nonaqueous electrolyte. The nonaqueous electrolyte that may be used in the embodiment is mainly a nonaqueous electrolytic solution, and preferably is a mixture including chain carbonates such as dimethyl carbonate (DMC), diethyl carbonate (DEC), ethyl methyl carbonate (EMC), di-n-propyl carbonate, di-t-propyl carbonate, di-n-butyl carbonate, di-isobutyl carbonate, or di-t-butyl carbonate, and cyclic carbonates such as propylene carbonate (PC) and ethylene carbonate (EC). The nonaqueous electrolytic solution is obtained by dissolving lithium salts such as lithium hexafluorophosphate ($LiPF_6$), lithium borofluoride ($LiBF_4$), LiFSI, and lithium perchlorate ($LiClO_4$) in such a carbonate mixture.

The nonaqueous electrolytic solution may also contain, as an additive, a cyclic carbonate compound different from the above-mentioned cyclic carbonates. Vinylene carbonate (VC) may be mentioned as a cyclic carbonate used as an additive. Further, a cyclic carbonate compound having halogen may be used as an additive. These cyclic carbonates are also compounds that form protective films on the negative electrode for nonaqueous electrolyte secondary battery and the positive electrode for nonaqueous electrolyte secondary battery during the charge and discharge process of the nonaqueous electrolyte secondary battery. In particular, they are compounds that may prevent attack on the positive electrode active material containing lithium-nickel composite oxide by sulfur-containing compounds such as the above-mentioned disulfonic acid compound or disulfonic acid ester compound. Examples of cyclic carbonate compounds having halogen include fluoroethylene carbonate (FEC), difluoroethylene carbonate, trifluoroethylene carbonate, chloroethylene carbonate, dichloroethylene carbonate, trichloroethylene carbonate, and the like. Fluoroethylene carbonate, which is a cyclic carbonate compound having halogen and having an unsaturated bond, is particularly preferably used.

Further, the nonaqueous electrolytic solution may further contain a disulfonic acid compound as an additive. The disulfonic acid compound is a compound having two sulfo groups in one molecule, and includes disulfonic acid salt compounds in which sulfo groups form salts together with metal ions, or disulfonic acid ester compounds in which sulfo groups form esters. One or two of the sulfo groups of the disulfonic acid compound may form salts together with metal ions, or may be in an anionic state. Examples of disulfonic acid compounds include methanedisulfonic acid, 1,2-ethanedisulfonic acid, 1,3-propanedisulfonic acid, 1,4-butanedisulfonic acid, benzenedisulfonic acid, naphthalenedisulfonic acid, biphenyldisulfonic acid, and salts thereof (lithium methanedisulfonate, lithium 1,2-ethanedisulfonate, and the like), and anions thereof (methanedisulfonic acid anion, 1,2-ethanedisulfonic acid anion, and the like). Further, disulfonic acid ester compounds may be mentioned as disulfonic acid compounds, including chain disulfonic acid esters such as alkyl diesters or aryl diesters of methanedisulfonic acid, 1,2-ethanedisulfonic acid, 1,3-propanedisulfonic acid, 1,4-butanedisulfonic acid, benzenedisulfonic acid, naphthalenedisulfonic acid, or biphenyldisulfonic acid; and cyclic disulfonic acid esters such as methylene methanedisulfonic acid ester, ethylene methanedisulfonic acid ester, propylene methanedisulfonic acid ester.

The nonaqueous electrolyte secondary battery of the embodiment is usually sealed with an exterior body. Sealing means that at least a portion of the nonaqueous electrolyte secondary battery element is wrapped with an exterior body material so as not to be exposed to outside air. The exterior body of the nonaqueous electrolyte secondary battery has gas barrier properties and is either a housing capable of sealing the nonaqueous electrolyte secondary battery element, or has a bag shape composed of flexible materials. For the exterior body, aluminum cans, aluminum laminate sheets in which aluminum foil and polypropylene are laminated, and the like may be suitably used. That is, any material may be used for the exterior body as long as it does not allow the nonaqueous electrolyte to leach to the outside. A laminate film may be used that has a heat-resistant protective layer such as polyester, polyamide, or liquid crystalline polymer on the outermost layer of the exterior body, and has a sealant layer composed of thermoplastic resin consisting of polyethylene, polypropylene, ionomer, acid-modified polyethylene such as maleic acid-modified polyethylene, acid-modified polypropylene such as maleic acid-modified polypropylene, polyethylene terephthalate (PET), polyethylene naphthalate (PEN), polyethylene isophthalate (PEI), blends of PET and PEN, blends of PET and PEI, polyamide resin, blends of polyamide resin and PET, blends of xylylene group-containing polyamide and PET, and the like on the innermost layer. The exterior body may be formed using one or multiple of these laminate films combined and bonded or welded together, and further multilayered. Aluminum, tin, copper, nickel, and stainless steel may be used as the gas barrier metal layer. The thickness of the metal layer is preferably 30 to 50 μm. Particularly preferably, an aluminum laminate, which is a laminate of aluminum foil and polymers such as polyethylene and polypropylene, may be used. The nonaqueous electrolyte secondary battery of the embodiment may be in various forms such as coin-type batteries, laminate type batteries, wound-type batteries, and the like.

Examples

The embodiments of the present invention have been described above. Examples of the present invention will be described below. Both the above embodiments and the examples described below are merely illustrative explanations of the present invention, and are not intended to limit the technical scope of the present invention to the configurations of specific embodiments or specific examples.

(Preparation of positive electrode, all examples and comparative examples)

$Li(Ni_{0.9}Co_{0.05}Mn_{0.05})O_2$ (97.5 mass%) as a positive electrode active material, polyvinylidene fluoride (PVDF, 1.5 mass%) as a positive electrode binder, and carbon nanotube (multi-wall carbon nanotube (MWCNT 1 mass%) as a conductive additive were mixed to form a positive electrode active material mixture. A positive electrode slurry was prepared by dispersing the positive electrode active material mixture in N-methyl-2-pyrrolidone. This positive electrode slurry was uniformly applied to one side of an aluminum current collector having a thickness of 12 $\mu$m. The thickness of the coating film was adjusted so that the initial charge capacity per unit area would be 4.0 mAh/cm$^2$. After drying, compression molding was performed with a roll press, and the density of the positive electrode active material layer was adjusted to 3.5 g/cm$^3$ to prepare a battery positive electrode.

(Preparation of negative electrode, Example 1)

$SiO_x$ (x=1.0, $S_A$=0.7m$^2$/g) as a silicon-based active material (A) as a negative electrode active material, artificial graphite ($S_B$=1.4m$^2$/g) as a carbon-based active material (B) consisting of secondary particles formed by aggregation of primary particles, and artificial graphite ($S_C$=1.7m$^2$/g) as a carbon-based active material (C) consisting of primary particles that do not aggregate with each other to form secondary particles, were used. A negative electrode active material mixture was obtained in which the mass ratio of the negative electrode active materials (the mass ratio of the $SiO_x$ of the silicon-based active material (A) to the artificial graphite of the negative electrode carbon-based active materials (B) and (C), expressed as ((A)/[(B)+(C)]) was 15/85 and the mass ratio of the carbon-based active material (B) to the carbon-based active material (C) was 1/1. This active material mixture (96.6 mass%), a polyacrylic acid-based binder as a negative electrode binder (trade name: 10CLPAH, Fujifilm Wako Pure Chemical Corporation, 3.0 mass%), single-wall carbon nanotube SWCNT, 0.3 mass%) as a conductive additive, and carboxymethyl cellulose (CMC, 0.1 mass%) were dissolved and dispersed in an aqueous solvent to prepare a negative electrode slurry. This negative electrode slurry was uniformly applied onto a Cu current collector having a thickness of 8 $\mu$m. The thickness of the coating film was adjusted so that the initial charge capacity per unit area would be 4.3 mAh/cm$^2$. Thereafter, compression molding was performed with a roll press, and the density of the negative electrode active material layer was adjusted to 1.65 g/cm$^3$ to prepare a battery negative electrode.

The $SiO_x$ used in the examples may be obtained as appropriate from, for example, Sigma-Aldrich Co., Kojundo Chemical Laboratory Co., Ltd., Kanto Chemical Co., Inc., Fujifilm Wako Pure Chemical Corporation, and the like, and the surface state such as surface coating components and roughness, particle diameter, and the like may be adjusted by using these alone or in combination and employing known methods such as heat treatment such as firing, chemical treatment such as CVD method, mechanical treatment such as pulverization and classification, and sputtering. Further, graphite may be obtained as appropriate from Nippon Graphite Industries, Co., Ltd., Resonac Corporation, and the like, and the surface state such as surface coating components and roughness, particle diameter, and the like may be adjusted by using these alone or in combination and employing known methods such as heat treatment such as firing, chemical treatment such as CVD method, mechanical treatment such as pulverization and classification, and sputtering.

It is noted that the conductive additive used here is an bundled SWCNT having a shape in which SWCNTs gather and are made longer and larger in diameter than a single SWCNT, with a length of about 1 $\mu$m and a diameter of about 10 nm. Multiple conductive additives are arranged on the surface of the negative electrode active material so as to contact any two or more types of negative electrode active materials among the silicon-based active material (A), carbon-based active material (B), and carbon-based active material (C). Such SWCNTs may be obtained from, for example, Meijo Nano Carbon Co., Ltd., Honjo Chemical Corporation, and Kusumoto Chemicals, Ltd.

In other examples and comparative examples, the types of negative electrode active materials used and the blending amounts of the negative electrode active materials were changed as shown in Table 1. The sources of the silicon-based active material (A) $SiO_x$ and the carbon-based active materials (B) and (C) were the same as those in Example 1. The mass ratio of the carbon-based active material (B) to the carbon-based active material (C) was set to 7:3 for Example 6 and Comparative Example 2, and was set to 1:1 for other examples and comparative examples, the same as in Example 1. The types and amounts of binder and conductive additive used, and the method for preparing the negative electrode active material layer were also the same as in Example 1 for all examples and comparative examples.

(Preparation of lithium ion secondary battery, all examples and comparative examples) A positive electrode and negative electrode cut to 3 cm × 3 cm were arranged to face each other with a separator interposed therebetween. A separator having a thickness of 10 μm with ceramic coating on two sides of a microporous polyethylene film was used.

The nonaqueous electrolytic solution was prepared by mixing an organic solvent and a supporting salt. The cyclic carbonate (EC) and chain carbonates (DEC, EMC) were adjusted to a volume ratio of 1/6, and lithium hexafluorophosphate ($LiPF_6$) and fluoroethylene carbonate (FEC) were added as supporting salts.

The above positive electrode, negative electrode, separator, and nonaqueous electrolytic solution were placed in a laminate exterior body, and the laminate was sealed to prepare a lithium ion secondary battery which is a nonaqueous electrolyte secondary battery. The positive electrode and negative electrode were connected with tabs and were in a state of being electrically connected from the outside of the laminate.

(Evaluation of lithium ion secondary battery)

For the lithium ion secondary batteries prepared in each example and comparative example, the capacity maintenance rate and the decrease in average voltage during 1C discharge were measured and evaluated by the following methods.

(Energy density)

The prepared battery was charged at 7.2 mA, and after the upper limit voltage reached 4.2 V, it was charged at constant voltage until the total charging time reached 12 hours. Thereafter, it was discharged at constant current at 7.2 mA until the lower limit voltage reached 2.5 V. After charging again under the same conditions, it was left in a constant temperature bath at 45°C for 3 days, discharged again under the same conditions, and charge and discharge was performed once more. The capacity and average voltage during the final discharge were evaluated. Further, after completion of this evaluation, the thickness of the laminate type battery (hereinafter sometimes simply referred to as "cell") was evaluated.

From the thickness of the cell, the sum of the thickness of the positive electrode active material layer, half the thickness of the positive electrode current collector, the thickness of the separator, the thickness of the negative electrode active material layer, and half the thickness of the negative electrode current collector, which are unit components of the laminate type battery, was calculated. Specifically, the thickness of the laminate, half the thickness of the positive electrode current collector, and half the thickness of the negative electrode current collector were subtracted from the thickness of the cell.

From the following calculation formula:

(Capacity during cell discharge)×(Average voltage during cell discharge)/(Electrode area)/(Thickness of positive electrode active material layer + Half thickness of positive electrode current collector + Thickness of separator + Thickness of negative electrode active material layer + Half thickness of negative electrode current collector)     [Formula 1]

the energy density of the unit component part of the laminate type battery was obtained.

(Capacity maintenance rate)

The prepared battery was placed in a constant temperature bath at 45°C, charged at 30 mA, and after the upper limit voltage reached 4.2 V, charged at constant voltage until the total charging time reached 2.5 hours. Subsequently, the battery was discharged at constant current of 30 mA until the lower limit voltage reached 2.5 V. This charge and discharge was repeated 100 times, and the ratio of the 100th discharge capacity to the 1st discharge capacity was taken as the capacity maintenance rate after 300 cycles.

(Peeling of negative electrode current collector and negative electrode active material layer after 300 cycles of charge and discharge)

After measuring the above capacity maintenance rate, the laminate type battery was disassembled, the negative electrode was removed, and observed visually. Those in which peeling was observed between the negative electrode current collector and the negative electrode active material layer were evaluated as "present", and those in which no peeling was observed between the negative electrode current collector and the negative electrode active material layer were evaluated as "absent".

[Table 1]

| Table 1: Blending amounts of negative electrode active materials and battery characteristics | | | | | | | | |
|---|---|---|---|---|---|---|---|---|
| | Silicon-based active material (A) $S_A$ [m²/g] | Carbon-based active material (B) $S_B$ rm²/g] | Carbon-based active material (C) Sc [m²/g] | $S_{max}/S_{min}$ | Mass ratio of the negative electrode active material (A)/ [(B)+(C)] | Capacity maintenance rate after 300 cycles [%] | Energy density [Wh/L] | Negative electrode peeling |
| Example 1 | 0.7 | 1.4 | 1.7 | 2.43 | 15:85 | 95.7 | 767 | Absent |
| Example 2 | 1.1 | 1.4 | 1.7 | 1.55 | 15:85 | 95.2 | 758 | Absent |
| Example 3 | 0.6 | 1.4 | 1.7 | 2.83 | 15:85 | 95.6 | 760 | Absent |
| Example 4 | 3.0 | 1.4 | 1.7 | 2.14 | 15:85 | 94.1 | 750 | Absent |
| Example 5 | 1.1 | 1.4 | 1.2 | 1.17 | 15:85 | 95.6 | 762 | Absent |
| Example 6 | 0.6 | 1.6 | 1.5 | 2.67 | 15:85 | 95.3 | 755 | Absent |
| Example 7 | 3.0 | 1.4 | 1.5 | 2.10 | 15:85 | 93.5 | 749 | Absent |
| Example 8 | 0.7 | 1.4 | 1.7 | 2.43 | 10:90 | 96.0 | 730 | Absent |
| Example 9 | 0.7 | 1.4 | 1.7 | 2.43 | 20:80 | 93.2 | 782 | Absent |
| Example 10 | 0.7 | 0.8 | 1.7 | 2.43 | 15:85 | 94.0 | 752 | Absent |
| Comparative Example 1 | 0.5 | 1.4 | 1.7 | 3.40 | 15:85 | Rapid deterioration | 755 | Present |
| Comparative Example 2 | 4.3 | 1.6 | 1.5 | 2.69 | 15:85 | Rapid deterioration | 749 | Present |
| Comparative Example 3 | 3.0 | 0.8 | 1.7 | 3.75 | 15:85 | Rapid deterioration | 750 | Present |

The nonaqueous electrolyte secondary battery using the negative electrode for nonaqueous electrolyte secondary battery of the example of the present invention has high energy density and high capacity maintenance rate after charge and discharge. On the other hand, the nonaqueous electrolyte secondary battery using the negative electrode for nonaqueous electrolyte secondary battery of the comparative example showed a decrease in either energy density or capacity maintenance rate, and could not improve both energy density and lifespan. By optimizing the blending ratio of the silicon-based active material and the carbon-based active material, and the specific surface areas of $SiO_x$ and two types of graphite, appropriate particle packing density of the negative electrode active material layer may be obtained, and by suppressing expansion of the electrode, the energy density and cycle capacity maintenance rate of the nonaqueous electrolyte secondary battery may be improved.

The cause of suppressing peeling between the negative electrode current collector and the negative electrode active material layer or improving the cycle characteristics of the battery by adjusting the specific surface area of the particles constituting the negative electrode active material to the range of the present invention is not clear. However, the specific surface area of particles constituting the negative electrode active material affects the aggregation state of the negative electrode active material particles in the negative electrode slurry and the adhesion of the binder between negative electrode active material particles in the case of forming the negative electrode active material layer, and it is considered that differences occur in the peeling property between the negative electrode current collector and the negative electrode active material layer.

The negative electrode for nonaqueous electrolyte secondary battery of the present invention has been described in detail above, but the present invention is not limited to the above-mentioned embodiment and examples, and various improvements and modifications may be made without departing from the spirit and scope of the present invention.

**Claims**

1. A negative electrode for nonaqueous electrolyte secondary battery, which is a negative electrode for a nonaqueous electrolyte secondary battery,

   wherein the negative electrode comprises a negative electrode active material layer containing a negative electrode active material, a binder, and a conductive additive,
   the negative electrode active material comprises a silicon-based active material (A) containing $SiO_x$ (where x is a number satisfying $0.5 \leqq x \leqq 1.6$);

   a carbon-based active material (B) consisting of secondary particles formed by aggregation of primary particles; and
   a carbon-based active material (C) consisting of primary particles different from the carbon-based active material (B), and

   specific surface areas of the silicon-based active material (A), the carbon-based active material (B), and the carbon-based active material (C) are $S_A[m^2/g]$, $S_B[m^2/g]$, and $S_C[m^2/g]$, respectively, a maximum specific surface area value among these specific surface areas is $S_{max}$, and a minimum specific surface area value among these specific surface areas is $S_{min}$, where a value of $S_{max}/S_{min}$ is 3 or less, and $S_{max}$ is 3 or less.

2. The negative electrode for nonaqueous electrolyte secondary battery according to claim 1, wherein a specific surface area $S_A$ of the silicon-based active material (A) is 0.7 $m^2/g$ or more.

3. The negative electrode for nonaqueous electrolyte secondary battery according to claim 1 or 2, wherein the carbon-based active material (B) and the carbon-based active material (C) comprise artificial graphite, hard carbon, soft carbon, or any mixture thereof.

4. The negative electrode for nonaqueous electrolyte secondary battery according to any one of claims 1 to 3, wherein the carbon-based active material (B) is artificial graphite having a surface coated with amorphous carbon, and the carbon-based active material (C) is artificial graphite having an uncoated surface.

5. The negative electrode for nonaqueous electrolyte secondary battery according to any one of claims 1 to 4, wherein a content of the silicon-based active material (A) is 10 mass% or more and 20 mass% or less with respect to a total amount of the silicon-based active material (A), the carbon-based active material (B), and the carbon-based active material (C) in the negative electrode.

6. The negative electrode for nonaqueous electrolyte secondary battery according to any one of claims 1 to 5, wherein the conductive additive comprises carbon nanotube.

7. The negative electrode for nonaqueous electrolyte secondary battery according to any one of claims 1 to 6, wherein the conductive additive is bundled single-wall carbon nanotubes in which single-wall carbon nanotubes are gathered.

8. The negative electrode for nonaqueous electrolyte secondary battery according to any one of claims 1 to 7, wherein a portion of the conductive additive exists in a state of being attached in advance to a surface of at least one of the silicon-based active material (A), the carbon-based active material (B), and the carbon-based active material (C).

9. The negative electrode for nonaqueous electrolyte secondary battery according to any one of claims 1 to 8, wherein the binder comprises polyacrylic acid.

10. A nonaqueous electrolyte secondary battery comprising at least the negative electrode for nonaqueous electrolyte secondary battery according to any one of claims 1 to 9, a positive electrode for nonaqueous electrolyte secondary battery, a separator, and an electrolyte.

## INTERNATIONAL SEARCH REPORT

| International application No. |
|---|
| **PCT/JP2023/044964** |

**A. CLASSIFICATION OF SUBJECT MATTER**

*H01M 4/36*(2006.01)i; *H01M 4/13*(2010.01)i; *H01M 4/48*(2010.01)i; *H01M 4/62*(2006.01)i; *H01M 4/587*(2010.01)i
FI: H01M4/36 E; H01M4/48; H01M4/587; H01M4/36 B; H01M4/36 C; H01M4/62 Z; H01M4/13

According to International Patent Classification (IPC) or to both national classification and IPC

**B. FIELDS SEARCHED**

Minimum documentation searched (classification system followed by classification symbols)

H01M4/36; H01M4/13; H01M4/48; H01M4/62; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2023-503706 A (CONTEMPORARY AMPEREX TECHNOLOGY CO., LTD.) 31 January 2023 (2023-01-31) <br> paragraphs [0001], [0028]-[0033], [0111], [0135]-[0137], [0144], [0149], [0169]-[0187] | 1-10 |
| A | WO 2015/045314 A1 (SANYO ELECTRIC CO., LTD.) 02 April 2015 (2015-04-02) <br> paragraph [0031] | 1-10 |
| A | WO 2021/085255 A1 (MURATA MANUFACTURING CO., LTD.) 06 May 2021 (2021-05-06) <br> paragraph [0044], fig. 4 | 1-10 |
| A | JP 2022-529987 A (LG ENERGY SOLUTION LTD.) 27 June 2022 (2022-06-27) <br> paragraph [0010] | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 February 2024** | **20 February 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2023/044964** |

| Patent document cited in search report | | | Publication date (day/month/year) | Patent family member(s) | | | Publication date (day/month/year) |
| --- | --- | --- | --- | --- | --- | --- | --- |
| JP | 2023-503706 | A | 31 January 2023 | US 2022/0367872 A1 paragraphs [0002], [0033]-[0039], [0153], [0178]-[0180], [0189], [0195], [0215]-[0239] EP 4075542 A1 KR 10-2022-0110862 A CN 115917780 A WO 2022/140902 A1 | | | |
| WO | 2015/045314 | A1 | 02 April 2015 | US 2016/0204430 A1 paragraph [0032] CN 105493330 A | | | |
| WO | 2021/085255 | A1 | 06 May 2021 | US 2022/0246979 A1 paragraph [0061], fig. 4 CN 114641871 A | | | |
| JP | 2022-529987 | A | 27 June 2022 | US 2022/0320518 A1 paragraph [0013] WO 2021/066554 A1 EP 3951953 A1 KR 10-2021-0040801 A CN 113785422 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016219275 A